# EUROPEAN PATENT SPECIFICATION

(11) **EP 1 435 600 B1**
(45) Date of publication and mention of the grant of the patent: **18.07.2007**
(21) Application number: 02259004.6
(22) Date of filing: 30.12.2002
(51) Int. Cl.: G08G 1/09, H04Q 7/38

(54) **Method and apparatus for determining the location of a wireless device**
Positionsbestimmungssystem und -verfahren eines drahtlosen Kommunikationsgerätes
Méthode et système de détermination de l'emplacement d'un dispositif de communication sans fil

(43) Date of publication of application: 07.07.2004
(73) Proprietor: MOTOROLA, INC., Schaumburg, IL 60196 (US)
(72) Inventor: Robinson, William Neal, Grayslake, IL 60030 (US); Boscovic, Dragan, 78450 Chavenay (FR); St. Clair, John, Bedford Texas 76021 (US); Hatala, Ted, Devizes Wiltshire SN10 5DX (GB)
(74) Representative: Bull, Michael Alan

(56) References cited:
- WO-A-01/01367
- WO-A-01/48725
- FR-A- 2 824 633
- US-A- 5 933 114

## Description

This invention relates generally to wireless devices and more particularly to location determination for a wireless device.

Broadcast systems are known. Such systems transmit signals from fixed location transmitters to multiple wireless devices in a coverage area. The coverage areas for broadcast systems typically range from a few kilometers to tens of kilometers. Examples of broadcast systems are television systems, FM radio systems, AM radio systems, digital video broadcast (DVB) systems, and digital audio broadcast (DAB) systems. In general broadcast systems may be analog systems such as FM radio or digital systems such as DVB and DAB. In digital broadcast systems, header information can be embedded in the data sent by the broadcast system. The header information can be used by the wireless devices receiving the broadcast information to filter the data. For example, if the user of the wireless devices is interested in receiving sports scores, the wireless device could use the header information to pull out the sports scores from the data being broadcast by the broadcast system and immediately tell the scores to the user of the wireless device.

Cellular systems are also well known. Such systems provide two-way communication from fixed location transmitter/receivers to wireless devices that may be mobile or fixed. The fixed location transmitter/receivers in a cellular system typically have a coverage area that ranges from less than a kilometer to ten kilometers (although larger coverage areas are possible). Examples of cellular systems include analog cellular (AMPS), Global System for Mobile Communications (GSM), Code Division Multiple Access (CDMA), integrated dispatch enhanced network (IDEN), and private trunked radio systems. Examples of wireless devices include, but are not limited to, cellular phones, pagers, two-way radios, computers equipped with wireless modems, personal digital assistants, Internet appliances, and data terminals. In general, information sent by the cellular system's fixed location transmitter/receivers is destined for only one of the wireless devices. Cellular systems also typically send a limited amount of broadcast information destined for all of the wireless devices in a coverage area. This broadcast information is typically control information that is used for a number of purposes such as, for example, to notify a wireless device of an incoming call or data transmission, to instruct a wireless device to switch frequencies, or for signaling during hand-off of the wireless device from one fixed location transmitter/receiver to another. Hence, this broadcast information is not used to convey data to the user of the wireless device.

Dual mode wireless devices that combine a broadcast system receiver with a cellular system transmitter/receiver are also known. For example, such wireless devices may have a CDMA transmitter/receiver for use with a cellular system and an FM receiver for use with a broadcast system. This would allow a user of a wireless device to listen to an FM radio station as well as use the wireless device for making cellular phone calls. Although such devices are dual mode, the information being received from the broadcast system and the cellular system is typically kept separate.

Because the information transmitted by a broadcast system is destined for a large number of wireless devices, it is efficient to broadcast large amounts of data. Hence broadcast systems are often used for data intensive applications such as sending video, high quality audio, and high-resolution images such as still pictures or maps. However, since the information is going to a large number of wireless devices, it is not personalized to account for the circumstances of the user of the individual wireless devices. In contrast, the information transmitted in a cellular system is personalized for the individual wireless device. However, since the information is destined for a single wireless device, it is not as efficient to use a cellular system for data intensive applications.

A system for locating a wireless unit is known from US 5933114. This system uses a cellular system only, i.e. with no broadcast system being used.

According to a first aspect of the present invention, there is provided a method for determining a location of a wireless device comprising the steps of: receiving broadcast system based location information; receiving cellular system based location information; and comparing the broadcast system based location information and the cellular system based location information to determine if a suitable correlation exists between the broadcast system based location information and the cellular system based location information.

According to a second aspect of the present invention, there is provided a wireless device comprising: a broadcast receiver operable to receive broadcast system based location information; a cellular receiver operable to receive cellular system based location data; and a broadcast/cellular system location correlation circuit operably coupled to the broadcast receiver and the cellular receiver wherein the broadcast/cellular system location correlation circuit is operable to determine if the broadcast system based location information and cellular system based location information derived from the cellular system based location data are suitably correlated.

According to a third aspect of the present invention, there is provided a wireless system comprising a plurality of wireless devices in accordance with the second aspect, and a broadcast/cellular location correlation network element operable to receive broadcast system based location information, to receive cellular system based location information for the plurality of wireless devices and to determine if the broadcast system based location information and cellular system based location information is suitably correlated for each of the plurality of wireless devices for which cellular system based location information is received.

According to a fourth aspect of the present invention there is provided a computer-readable medium having stored therein executable instructions for performing steps of: receiving broadcast system based location information; receiving cellular system based location information; and comparing the broadcast system based location information and the cellular system based location information to determine if a suitable correlation exists between the broadcast system based location information and the cellular system based location information.

### BRIEF DESCRIPTION OF THE DRAWING

FIG. 1 illustrates a wireless device that receives signals from both digital broadcast systems and cellular systems in accordance with one embodiment of the present invention;

FIG. 2 is a flow chart illustrating a method for determining a location of a wireless device in accordance with one embodiment of the present invention;

FIG. 3 is a flow chart illustrating another method for determining a location of a wireless device in accordance with one embodiment of the present invention;

FIG. 4 is a flow chart illustrating yet another method for determining a location of a wireless device in accordance with one embodiment of the present invention;

FIG. 5 illustrates a wireless device in accordance with one embodiment of the present invention;

FIG. 6 is a flowchart of a method for determining a location of a wireless device in accordance with one embodiment of the present invention;

FIG. 7 is a flowchart of an alternate embodiment of the method of FIG. 4 for determining a location of a wireless device; and

FIG. 8 is a flow chart of an alternative embodiment of the method shown in FIG. 2.

### DETAILED DESCRIPTION OF A PREFERRED EMBODIMENT

Briefly, a method and apparatus for determining a location of a wireless device obtains broadcast system based location information and cellular system based location information. Broadcast system based location information may be, for example, broadcast data representing the location of an event that is sent by a broadcast system or other suitable broadcast data. Cellular system based location information may be, for example, data representing the location of a wireless device. A comparison between the broadcast based location information and cellular system based location information is made to determine if they are suitably correlated. The broadcast system based location information and the cellular system based location information are suitably correlated, for example, when they are sufficiently close together.

In one embodiment, broadcast system based location information is received by a DxB receiver (e.g, DVB or DAB) and cellular system based location data is received by a cellular receiver. The cellular system based location data may include the cellular system based location information or other information that the wireless device can use to obtain (e.g. derive) the cellular system based location information. For example, the cellular system based location data can include synchronization information that allows the wireless device to quickly synchronize to satellite signals that can be used to calculate the cellular system based location information. The cellular system based location data may also include a cellular system signal which the wireless device can use to calculate cellular system based location information using time difference of arrival and/or angle of arrival estimation techniques or other suitable location calculation techniques. A comparison between the broadcast based location information and cellular system based location information obtained from the cellular based location data is made to determine if they are suitably correlated.

A wireless device includes a broadcast receiver that can receive broadcast system based location information, a cellular receiver that can receive cellular system based location data, and a broadcast cellular system location correlation circuit. The broadcast cellular system location correlation circuit determines if the broadcast based location information and cellular system based location information obtained from the cellular based location data are suitably correlated.

Also, in one embodiment, a cellular system contains a broadcast/cellular location correlation network element. The broadcast/cellular location correlation network element receives cellular system based location information from multiple wireless devices as well as broadcast system based location information. For each of the multiple wireless devices, the broadcast/cellular location correlation network element determines if the broadcast system based location information and cellular system based location information is suitably correlated.

Among other advantages, the present invention allows for information received from broadcast systems and cellular systems to be combined based on location information. This makes the information more useful to a user of a wireless device as well as allows the information to be more efficiently delivered to the wireless device. Furthermore, only information that is relevant to the user is presented so that the user is not bothered with unwanted information.

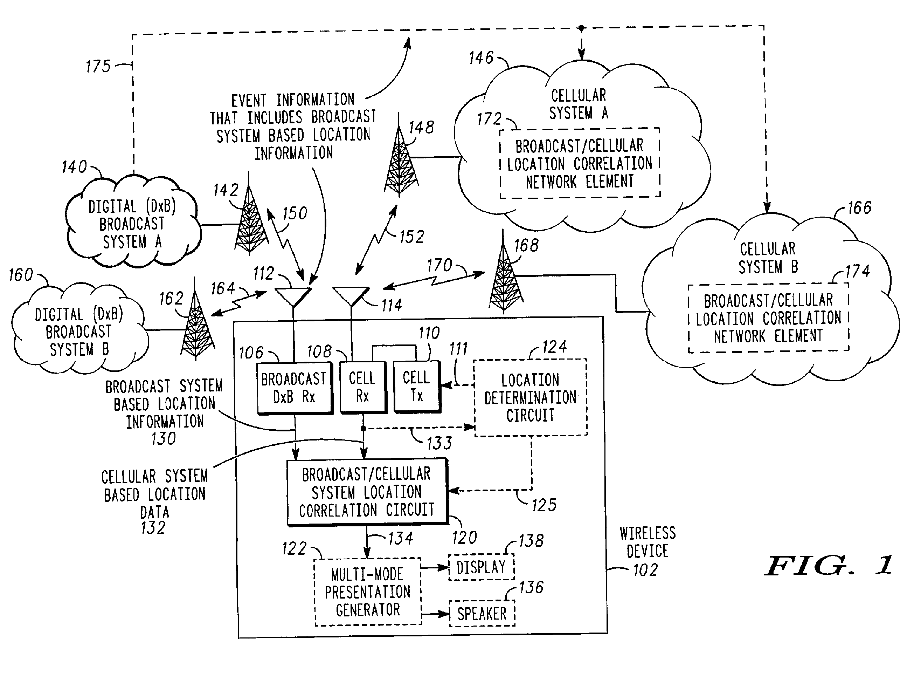

FIG. 1 illustrates a wireless device 102 that is operable to receive signals from both digital broadcast systems 140, 160 and cellular systems 146, 166. The wireless device may be, for example, a cellular phone, pager, two-way radio, computers equipped with wireless modem, personal digital assistant, Internet appliance, data terminal or any other suitable device. The wireless device includes a first and second antenna 112, 114, a broadcast receiver 106, a cellular receiver 108, a cellular transmitter 110, and a broadcast/cellular location correlation circuit 120. In other embodiments the wireless device 102 may also include a location determination circuit 124, a multi-mode presentation generator 122, a speaker 136, and/or a display 138 as further described below.

The first antenna 112, as is known in the art, is operable to receive signals from a number of different digital broadcast systems 140, 160 such as digital video broadcast (DVB) systems or digital audio broadcast (DAB) systems (hereinafter referred to as DxB systems). The first antenna 112 is coupled to the broadcast receiver 106. The broadcast receiver may be a conventional broadcast receiver. The broadcast receiver 106 is operable to demodulate the signals received by the first antenna 112. The broadcast receiver 106 receives event information included in the signals received from the broadcast systems 140, 160 via the first antenna 112. Such event information may include map information, audio information, and broadcast system based location information 130, or other suitable information. For example, map information may include, but is not limited to maps represented as bit maps, PDF files, other files and may also include universal reference data such as latitude-longitude of a top left hand corner of a map and some scaling information unless there is a default scaling. The scaling information may be needed because more detailed information is superimposed from the cellular system onto the map, so the device needs to know where to put it on the display. Event information may include timing data (e.g., the football match will finish at 9:10 pm, anticipate travel delays for the following hour, or other suitable data. Broadcast system based location information 130 may represent the location of an event such as, for example, a traffic accident, a store having a sale, sport events, road work or other suitable event.

The second antenna 114, as known in the art, is coupled to the cellular receiver 108 and the cellular transmitter 110. The second antenna 114, receives signals from and sends signals to the cellular systems 146, 166. The signals 152, 170 received from the cellular systems 146, 166 include cellular system based location data 132. The cellular receiver 114 is operable to demodulate the signals 152, 170 received by the second antenna 114. The cellular receiver 108 may be any conventional receiver such as, for example, a GSM receiver, CDMA receiver, AMPS receiver, etc. Hence the cellular receiver 108 is operable to receive cellular system based location data 132. The cellular transmitter 110 is operable to send signals via the antennae 114 to the cellular systems 146, 166.

The cellular system based location data 132 may include cellular system based location information 125. The cellular system based location information 125 is data representing a location of the wireless device 102. Such cellular system based location information 125 may include, for example, data representing at least one of latitude, longitude, altitude, map information, coordinates with respect to a fixed point, or other suitable information. Map information that can be considered cellular system based location information may include but is not limited to data representing absolute location of the subscriber, relative location of a subscriber from a known point, or proximity of two or more subscribers. The cellular system based location information 125 may also represent the coverage area of a cellular transmitter/receiver from which the wireless device 102 is receiving signals. The cellular system based location data 132 may also be signals 152, 170 received from the cellular systems 146, 166 from which the wireless device 102 calculates the cellular system based location information 125. The wireless device may calculate the cellular system based location information 125 from the received signals using time difference of arrival or angle of arrival techniques as is known in the art or by using any other suitable location calculation techniques. The cellular system based location data 132 may also be information that may assist the wireless device 102 in obtaining cellular system based location information 125. For example, the information may be used by the wireless device 102 to quickly synchronize to signals received from satellites that are used to calculate the location of the wireless device 102. Such cellular system assisted satellite based location calculation techniques are known in the art.

The broadcast receiver 106 and cellular receiver 108 are coupled to the broadcast/cellular system location correlation circuit 120. The broadcast/cellular location correlation circuit 120 may be implemented, for example, as an integrated circuit, as a state machine, as a non-integrated circuit, using digital logic, or as software running on a processor or any suitable combination of hardware, software or firmware. The broadcast/cellular location correlation circuit 120 may also be part of an integrated circuit that performs other task such as, for example, location determination. The broadcast cellular system location correlation circuit 120 receives the broadcast system based location information 130 from the broadcast receiver 106. The broadcast/cellular system location correlation circuit 120 also receives the cellular system based location information 125. In different embodiments of the present invention, the broadcast/cellular system location correlation circuit 120 can receive the cellular system based location information 125 in a number of different ways. For example, if the cellular system based location data 132 includes cellular system based location information 125, the broadcast/cellular system location correlation circuit 120 receives the cellular system based location information 125 from the cellular receiver 108 as part of the cellular system based location data 132. In another embodiment, the broadcast/cellular system location correlation circuit 120 obtains the cellular system based location information 125 by receiving it from the location determination circuit 124. The broadcast/cellular system location correlation circuit 120 determines if the broadcast system based location information 130 and the cellular system based location information 125 are suitably correlated, such as, for example, if the locations represented by the broadcast system based location information 130 and the cellular system based location information 125 are close to each other.

The wireless device 102 may contain a multi-mode presentation generator 122 coupled to the broadcast cellular system location correlation circuit 120. The multi-mode presentation generator 122 may be implemented, for example, as an integrated circuit, as a state machine, as a non-integrated circuit, using digital logic, or as software running on a processor. The multi-mode presentation generator 122 may also be part of an integrated circuit that performs other task such as, for example, location determination or correlation. The multi-mode presentation generator 122 is operable to simultaneously present information derived from the broadcast system based location information and the cellular system based location information 125 to a user of the wireless device 102. The simultaneously presented information may include, for example, a map showing the location of the wireless device 102 as defined by the cellular based location information 125 in relation to the location of some event as defined by the broadcast system based location information 130 or audio information related to some event. In one embodiment the multi-mode presentation generator 122 may be operable to send an audible message derived from the broadcast system based location information 130 and the cellular system based location information 125 to the speaker 136. The speaker may be any type of sound producing device as are known in the art. In another embodiment the multi-mode presentation generator 122 may send signals derived from the broadcast system based location information 130 and the cellular system based location information 125 to the display 138. The display 138 may be any type of display device, such as, for example, a liquid crystal display (LCD), cathode ray tube, computer monitor, television, etc.

The wireless device 102 may also contain a location determination circuit 124. The location determination circuit 124 may be implemented, for example, as an integrated circuit, as a state machine, as a non-integrated circuit, using digital logic, or as software running on a processor. The location determination circuit 124 may also be part of an integrated circuit that performs other task such as, for example, presentation generation or correlation. The location determination circuit 124 is coupled to the broadcast cellular system location correlation circuit 120. The location determination circuit 124 may also be coupled to the cellular receiver 108 and/or cellular transmitter 110.

The location determination circuit 124 may be a satellite based location determination circuit that calculates a location of the wireless device using signals received from satellites or other suitable location determination circuit. A satellite based location determination circuit utilizes signals received from satellites of the global positioning system (GPS) or some other satellite based location determination system to calculate a location of the wireless device 102 as is known in the art. Such a satellite based location determination circuit may be assisted by cellular system based location data 132 received from the cellular systems 146 and 166 as is known in the art. For example, the cellular system based location data 132 may assist the location determination circuit 124 by allowing it to quickly synchronize to the signals received from the satellites or by correcting for known timing errors in the signals received from the satellites. Hence the cellular system based location data 132 is used to derive cellular system based location information 125. Alternately, the satellite based location determination circuit may not require assistance from the cellular systems 146, 166 to receive signals from the satellite and calculate the location of the wireless device 102.

The location determination circuit 124 may use other methods to calculate a location of the wireless device 102 other than satellite based location determination methods. For example, the location determination circuit 124 may determine the location of the wireless device 102 based on the estimated times of arrival of signals received from the cellular systems 146, 166; by determining the direction of arrival of the signals received from the cellular systems 146, 166; some combination of time of arrivals and directions of arrival of the signals from the cellular systems 146, 166; or other suitable location calculation techniques. In this case, the signals received from the cellular system 146, 166 would be cellular system based location data 132. The location determination circuit 124 would use the cellular system based location data 132 to derive cellular system based location information 125.

The cellular system based location information 125 may also be sent directly from the cellular systems 146, 166 to the wireless device 102 as part of the cellular system based location data 132. In this case the wireless device 102 would not contain a location determination circuit 124. The cellular system based location information 125 included in (or derived from) the cellular system based location data 132 may be calculated by the cellular systems 146, 166 using a number of different methods such as time of arrival of signals received from the wireless device 102; direction of arrival of the signals received from the wireless device 102 by the cellular system 146, 166; some combination of angle of arrival and direction of arrival; or other suitable location calculation technique.

The digital broadcast systems 140, 160 may be any suitable type of digital broadcast system. For example, the digital broadcast systems 140, 160 may be DVB systems or DAB systems as are known in the art. Each of the digital broadcast systems 140, 160 include at least one fixed location transmitter 142, 162. The fixed location transmitters transmit signals 150, 164 to multiple wireless devices in a coverage area. These signals 150, 164 are received by the wireless device 102.

The cellular systems 146, 166 provide 2-way communication to wireless devices as is well-known in the art. Such cellular systems may include analog cellular systems (AMPS), Global System for Mobile Communication (GSM) cellular systems , Code Division Multiple Access (CDMA) cellular systems, trunked radio systems, or any other radio system that provides 2-way communication to wireless devices through the use of fixed location transmitters. The cellular systems 146, 166 each contain at least one fixed location transmitter/receiver 148, 168. The fixed location transmitter/receivers sends signals to and receives signals from wireless devices in a coverage area.

In one embodiment, the cellular systems 146, 166 may also contain broadcast/cellular location correlation network elements 172, 174. The broadcast/cellular location correlation network elements 172, 174 may be located anyway within the cellular systems 146, 166. Each cellular system 146, 166 may contain multiple broadcast/cellular location correlation network elements 172, 174. The broadcast/cellular location correlation network elements 172, 174 may be implemented, for example, as an integrated circuit, as a state machine, as a non-integrated circuit, using digital logic, or as software running on a processor. The broadcast/cellular location correlation circuit 120 may also be part of an integrated circuit that performs other task. The broadcast/cellular location correlation network elements 172, 174 receive broadcast system based location information and cellular system based location information for a plurality of wireless devices. The broadcast/cellular location correlation network elements 172, 174 determine if the broadcast system based location information and cellular system based location information are suitably correlated for each of the plurality of wireless devices for which cellular system based location information is received. It should be noted that when the cellular systems 146, 166 include broadcast/cellular location correlation network elements 172, 174, the wireless device 102 may or may not include a broadcast/system location correlation circuit 120.

The cellular system based location information used by the broadcast/cellular location correlation network elements 172, 174 may be received from the wireless devices via the fixed location transmitter/receivers 148, 168. In this case, the wireless devices would calculate cellular system based location information using the location determination circuit 124. The cellular system based location information may also be calculated by the cellular systems 146, 166. This calculation may be done, for example, by calculating the time of arrival and/or angle of arrival of signals received from the wireless devices by the cellular systems 146, 166 using known techniques or by using any other suitable location calculation technique.

In one embodiment, the cellular systems 146, 166 may be linked to the digital broadcast systems 140, 160. This link 174 may be a physical connection such as a fiber optic connection, wireless link, telephone link or the link may be a broadcast receiver that is part of the cellular systems 146, 166 (not shown). The link 174 may be used to transmit event information such as, for example, map information, audio information, broadcast system based location information, or other suitable information. The broadcast system based location information may then be used by the broadcast/cellular location correlation network elements 172, 174.

Both the broadcast/cellular location correlation network elements 172, 174 and the broadcast/cellular system location correlation circuit 120 determine if the cellular system based location information 125 and broadcast system based location information 130 are suitably correlated. Suitably correlated may have a number of different meanings. For example, the broadcast system based location information 130 and the cellular system based location information 125 can be suitably correlated if the locations represented by the broadcast system based location information 130 and the cellular system based location information 125 are suitably close to each other. The definition of suitably close can be determined in a number of different ways. For example, the user of the wireless device 102 may specify a threshold distance. If the locations represented by the broadcast system based location information 130 and the cellular system based location information 125 are closer than the threshold distance, then they are suitably correlated. Alternatively, there may be a default threshold distance such as, for example, 1.61 km (one mile), 3.22 km (two miles), etc. There may be different default threshold distances for different types of events. For example, if the broadcast system based location information represents the location of an accident one threshold may be used while if the broadcast system based location information represents the location of a store having a sale, another threshold can be used. The threshold may also be varied depending on circumstances such as the time of day or the speed at which the location of the wireless device 102 is moving.

Suitably correlated may also be determined by the cellular system transmitter/receiver coverage area that the wireless device 102 is in. For example, coverage areas for fixed location transmitter/receivers 148, 168 used in cellular systems are typically much smaller than coverage areas of fixed location transmitters in broadcast systems. Hence if the location represented by the broadcast system based location information 130 is within the coverage area of the cellular system transmitter/receiver 148, 168 that the wireless device 102 is currently receiving signals from, then the locations may be suitably correlated. As will be appreciated, any other suitable correlation criteria may be used.

While FIG. 1 illustrates two digital broadcast systems 140, 160 and cellular systems 146, 166, it should be understood that any suitable number of digital broadcast systems and cellular systems may be present. The digital broadcast systems 140, 160 may contain more than one fixed location transmitter 142, 162. The cellular systems 146, 166 may contain more than one fixed location transmitter/receivers. Only one of the cellular systems 146, 166 may have a broadcast/cellular location correlation network element 172, 174. While FIG. 1 for simplicity just shows one wireless device 102, there may in general be any number of wireless devices receiving signals from the digital broadcast systems 140, 160 and cellular systems 146, 166.

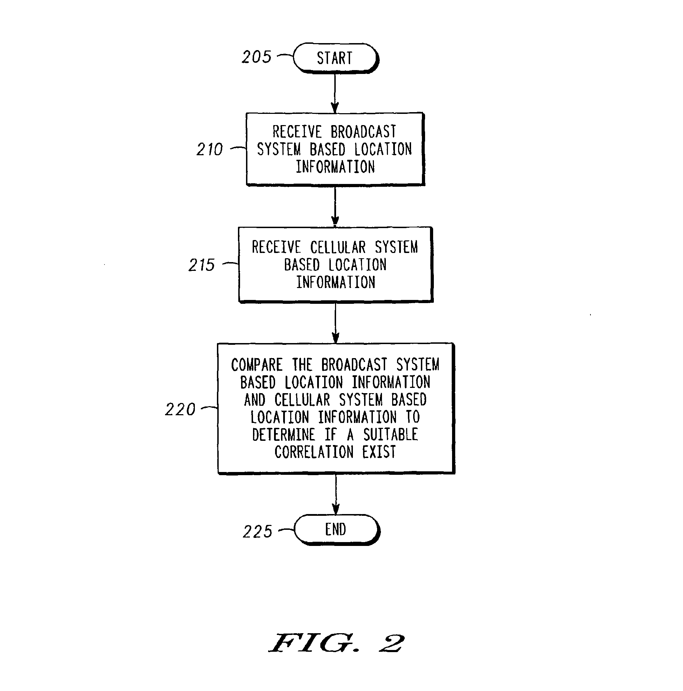

FIG. 2 illustrates a method for determining a location of a wireless device in accordance with one embodiment of the present invention. The method begins at step 205 where broadcast system based location information 130 is received by a broadcast/cellular system location correlation circuit 120 within the wireless device 102. The broadcast system based location information 130 may be received by the broadcast/cellular system location correlation circuit 120 from the broadcast receiver 106. The broadcast system based location information 130 may also be included as part of event information 113 or other information that is received from the broadcast system 140, 160 by the wireless device 102 through the broadcast receiver 106. In an alternative embodiment that includes broadcast/cellular location correlation network elements 172, 174 within the cellular systems 146, 166, the broadcast system based location information may be received by the broadcast/cellular location correlation network element 172, 174. The broadcast system based location information is received by the broadcast/cellular location correlation network elements via a link 175 or by a broadcast receiver (not shown).

At step 215, cellular system based location information 125 is received by the broadcast/cellular system location correlation circuit 120. The cellular system based location information 125 may be received by the broadcast/cellular system location correlation circuit 120 as part of cellular system based location data 132 received from a cellular receiver 108. The cellular receiver 108 may receive the cellular system based location data 132 at the same time as the receipt of the broadcast system based location information 130. The cellular system based location information 125 may also be received by the broadcast/cellular system location correlation circuit 120 from a location determination circuit 124 within the wireless device 102. Such a location determination circuit 124 may be a satellite location determination circuit that calculates the cellular system based location information 125 based on signals received from one or more satellites. Such a satellite based location determination circuit, as known in the art, may be assisted by the cellular system 146, 166. In that case, cellular system based location data 132 received from the cellular system 146, 166 through a cellular receiver may be used by the satellite based location determination circuit to assist in the calculation of cellular system based location information 125. The location determination circuit 124 may also obtain the cellular system based location information 125 by calculating it based on signals received from the cellular system 146, 166 through the cellular receiver 108.

In an alternative embodiment that includes broadcast/cellular location correlation network elements 172, 174 within the cellular systems 146, 166, the cellular system based location information 125 may be received by the broadcast/cellular location correlation network elements 172, 174 by receiving it from the wireless device 102 via the fixed transmitter/receivers 148,168. The cellular system based location information 125 may also be derived by the cellular system 146, 166 by calculating it from signals received from the wireless device 102. Such a calculation may be done using time of arrival and/or direction of arrival location calculation techniques as are known in the art. The cellular system based location information 125 would then be received by the broadcast/cellular location correlation network elements 172, 174.

At step 220, the broadcast system based location information 130 and the cellular system based location information 125 are compared to determine if a suitable correlation exists between the broadcast system based location information 130 and the cellular system based location information 125. Such a suitable correlation may exist, for example, if the respective location represented by the broadcast system based location information and the cellular system based location information are suitably close to each other.

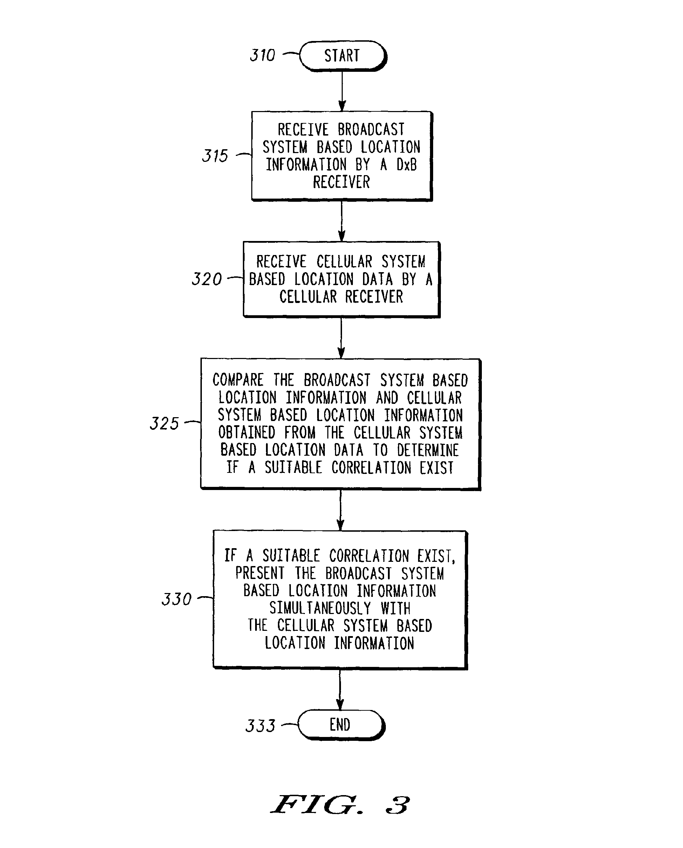

FIG. 3 illustrates a flow chart of a method for determining a location of a wireless device 102 in accordance with the present invention. The method begins at step 315 where broadcast system based location information 130 is received by a DxB receiver 106. In general, the DxB receiver 106 may be either a DVB, a DAB receiver, or any other suitable broadcast signal receiver. The broadcast system based location information 130 may be included as part of event information 113 that is received from a broadcast system 140, 160 by the wireless device 102 through the DxB receiver 106. At step 320, cellular system based location data 132 is received by the cellular receiver 108. The cellular system based location data 132 may include cellular system based location information 125 that represents the location of the wireless device 102. The cellular system based location data 132 may alternately include information that is used by the wireless device 102 to derive cellular system based location information 125. For example, the cellular system based location data 132 may also be signals 152, 170 received from the cellular systems 146, 166 from which the wireless device 102 calculates the cellular system based location information 125. The wireless device 102 may calculate the cellular system based location information 125 from the received signals using time difference of arrival or angle of arrival techniques as is known in the art or by using any other suitable location calculation technique. The cellular system based location data 132 may also be information that assist the wireless device 102 in obtaining cellular system based location information 125.

At step 325, the broadcast system based location information 130 and the cellular system based location information 125 derived from the cellular system based location data 130 are compared to determine if a suitable correlation exists between the broadcast system based location information 130 and the cellular system based location information 125. Next at step 330, if a suitable correlation exists between the broadcast system based location information 130 and the cellular system based location information 125, the broadcast system based location information 130 is simultaneously presented with the cellular system based location information 125. This presentation can be done on a display 138, through a speaker 136, or using another suitable method.

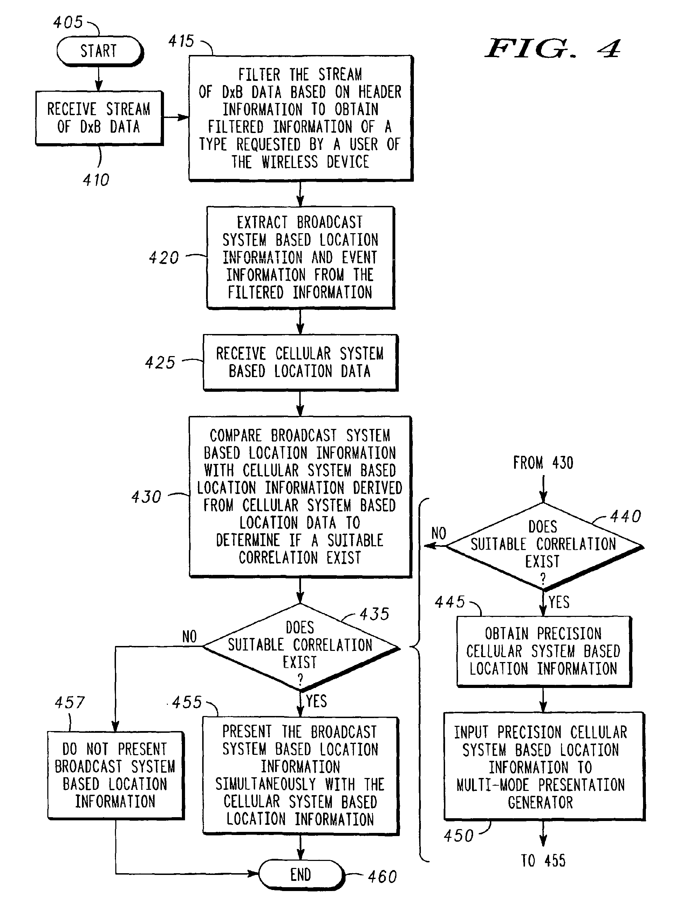

FIG. 4 illustrates a method for determining a location of a wireless device 102 in accordance with the present invention. The method begins at step 410 where a stream of DxB data is received by a DxB receiver 106. Then at step 415, the stream of DxB data is filtered based on header information in the stream of DxB data to obtain filtered information of a type requested by a user of the wireless device 102. For example, the user may request to be informed if certain types of information are received from the DxB system. A particular user, for example, may be interested in receiving sports scores, weather related information, traffic related information, or other categories of information. As is known, the DxB data stream contains header information which allows the stream to be filtered depending on the type of information desired. The wireless device 102 filters the DxB data stream to obtain the type of information requested by the user. Next, at step 420, broadcast system based location information 130 and event information 113 associated with an event are extracted from the filtered information. For example, if the type of information requested by the user is traffic information, an event could be a traffic accident. The wireless device 102 then extracts from the filtered information related to traffic, event information 113 associated with the accident, and broadcast system based location information 130 such as street names, address, or coordinates (latitude/longitude or coordinates with respect to a fixed point) that represents the location of the accident.

Next, at step 425, cellular system based location data 132 is received. Such cellular system based location data may include, for example, cellular system based location information 125 representing the location of the wireless device 102, such as for example, street names, address, or coordinates (latitude/longitude or coordinates with respect to a fixed point); information that is used by the wireless device 102 to assist in obtaining cellular system based location information 125, such as, for example, information used to enable a satellite location determination circuit to quickly synchronize to satellite signals; or signals used by the wireless device to obtain cellular system based location information 125, such as, for example, signals used to determine the location of a wireless device using time of arrival and/or direction of arrival location techniques. Then at step 430, the broadcast system based location information is compared with the cellular system based location information 125 derived from the cellular system based location data 130 to determine if a suitable correlation exists. If a suitable correlation exists, at step 455 the broadcast system based location information 130 is presented simultaneously with the cellular system based location information 125. This presentation can be done on a display 138, through a speaker 136 or any other suitable method.

In an alternate version of the method of FIG. 4, the cellular system based location information 125 may include low accuracy cellular system based location information. Then, if a suitable correlation exists between the low accuracy cellular system based location information and the broadcast based location information 130, precision cellular system based location information will be obtained at step 445. For example, the low accuracy cellular system based location information may represent the coverage area of the cellular system transmitter/receiver 148, 168 in which the wireless device 102 is currently located. The precision cellular system location information may represent a location of the wireless device 102 calculated by the wireless device 102 or by the cellular system 146, 166. Step 445 of obtaining precision cellular system based location information may include deriving precision cellular system based location information from the location determination circuit 124 using a satellite based location determination method. The cellular system based location information may also be received via the cellular receiver 108. In this case, the precision cellular system based location information is calculated by the cellular system 146, 166 and sent to the wireless device 102. Next, at step 450, the precision cellular system based location information is then input into the multi-mode presentation generator 122. Depending on whether the precision cellular system based location information is derived by the location determination circuit 124 or received via the cellular receiver 108, the cellular system based location information 125 is inputted into the multi-mode presentation generator by receiving it from the location determination circuit 124 or the cellular receiver 108. It may then be presented simultaneously with the broadcast system based location information 130 in step 455.

The methods of FIGS. 2-4 may be used to simultaneously display broadcast system based location information 130 and cellular system based location information 125. This display may be accomplished by showing the location represented by the broadcast based location information 130 and the cellular system based location information 125 on the same map. The broadcast system based location information 130 may be obtained as part of event information 113. Such event information 113 may include map information and audio information. For example, the event information may be information related to a traffic accident. The event information 113 may include a map which shows broadcast system based location information 130 pinpointing the location of the traffic accident. The broadcast system based location information 130 may be an intersection of two streets on the map, a street address, latitude and longitude coordinates, or coordinates with respect to a fixed point that represent the location of the accident. The event information 113 may also include an audio description of the location and the severity of the accident. The cellular system based location information 125 represents the location of the wireless device. The comparison of the broadcast system based location information 130 with the cellular system based location information 125 would determine whether the location of the wireless device 102 was close to the location of the accident based on a preset or user selected distance threshold. If the locations were suitably close, a map showing the location of the accident and the location of the wireless device 102 is displayed by the wireless device 102.

As another example of the use of the methods of FIGS. 2-4, the event information 113 received by the wireless device 102 may relate to a sale occurring at a number of stores. The event information 113 may include broadcast system based location information 130 representing the location of the stores. The cellular system based location information 125 representing the location of the wireless device 102 could then be compared to the locations of the stores. If the locations are suitably close, the wireless device 102 informs the user of the wireless device 102 of the existence and location of the sales, that a sport event is finishing and fans leaving a stadium are about to cause traffic congestion. As will be appreciated, many other applications of the present invention are possible.

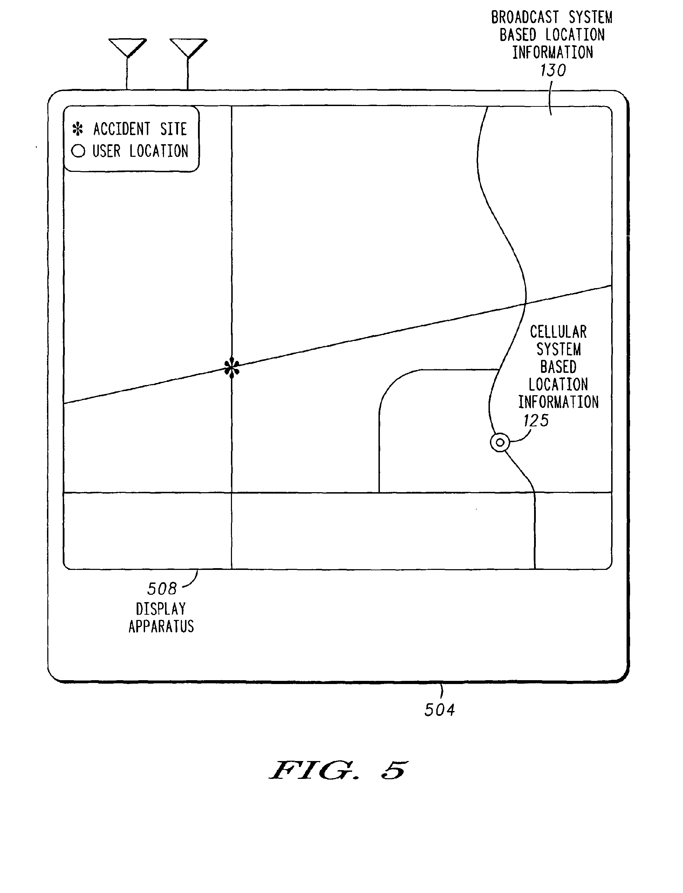

FIG. 5 illustrates a wireless device 504 in accordance with the present invention. The wireless device 504 includes a display apparatus 508 such as a CRT or LCD screen that displays a representation of the broadcast system based location information 130 and cellular system based location information 125 to a user of the wireless device 504. The display apparatus shows a map showing the roads in the area where the wireless device 504 is located. The map shows a representation of the broadcast system based location information 130 that is the location of an accident at the intersection of two roads. The display apparatus 508 also shows a representation of the cellular system based location information 125 as a user location. Hence, the wireless device 504 simultaneously displays the broadcast system based location information 130 and the cellular system location information 125.

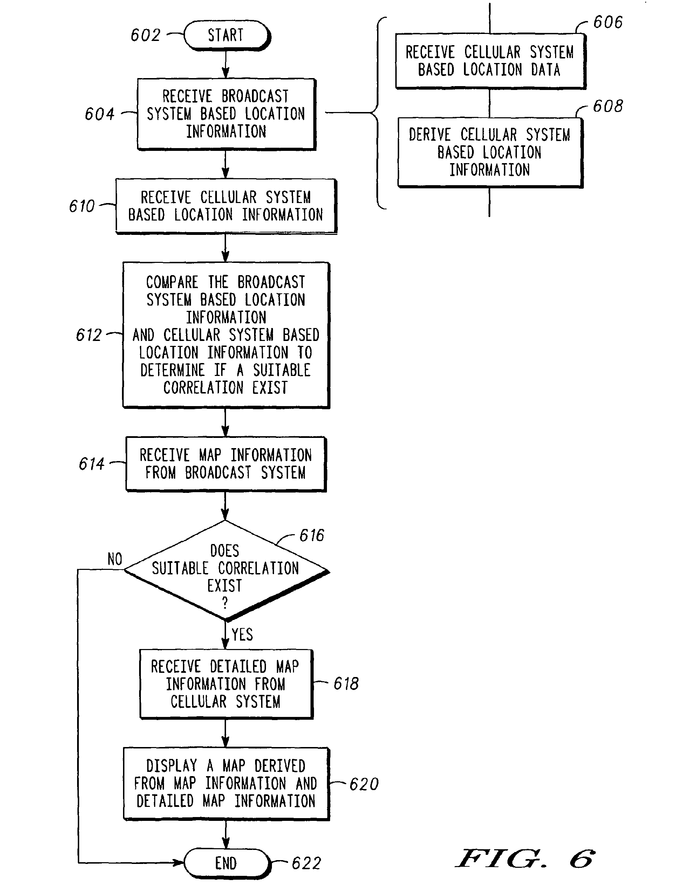

FIG. 6 illustrates a flowchart of a method for determining a location of a wireless device 102 in accordance with the present invention. Steps 604, 610, and 612 are identical to steps 205, 215, and 220 of FIG. 2. In one embodiment, step 604 of receiving broadcast system based location information 125 may be divided into two separate steps, 606 and 608. In step 606, cellular system based location data 130 is received by the cellular receiver 108 of the wireless device 102. The cellular system based location data 130 may be cellular system based location information 125 that represents the location of the wireless device 102 or the cellular system based location data 132 may be information that can be used by the wireless device 102 to obtain or assist in obtaining the cellular system based location information 125. Next, at step 608, cellular system based location information 125 is derived from the cellular system based location data 132. How the cellular system based location information 125 is derived using the cellular system based location data 132 depends on what form the cellular system based location data 132 takes. If the cellular system based location data 132 contains the cellular system based location information 125, the cellular system based location information 125 is derived by simply reading it from the cellular system based location data 132. If the cellular system based location data 132 is signals 152, 170 received from the cellular systems 146, 166 from which the wireless device 102 can calculate the cellular system based location information 125, the cellular system based location information 125 is derived by calculating it using the signals 152, 170. If the cellular system based location data 132 is information that may assist the wireless device 102 in obtaining cellular system based location information 125, then the cellular system based location information 125 is derived using this information.

After step 612, at step 614 map information is received by the wireless device 102 from one of the broadcast systems 146, 166. The map information may be received as part of event information 113 that is sent from one of the broadcast systems 140, 160 to the wireless device 102. At step 616, if a suitable correlation exists between the cellular system based location information 125 and the broadcast system based location information 130, detailed map information is received from one of the cellular systems 146, 166 by the wireless device 102. Then, at step 620, if a suitable correlation exists between the cellular system based location information 125 and the broadcast system based location information 130, a map derived from the map information received from the broadcast system and the detailed map information received from the cellular system is displayed. The derived map may be created, for example, by overlaying the detailed map information over the map information received from the broadcast system 140, 160. Using this method, map information received from the broadcast system may be enhanced when needed by additional detailed map information received from the cellular system 146, 166. For example, if the map information received from the broadcast system 140, 160 included a map showing the major roads in an area, the detailed map information may show all of the roads in the vicinity of the wireless device 102. This detailed map information could then be displayed if an accident site represented by the broadcast system based location information 130 is close to the location of the wireless device 102. The display of the map information could then enable the user of the wireless device 102 to determine a route to avoid the accident.

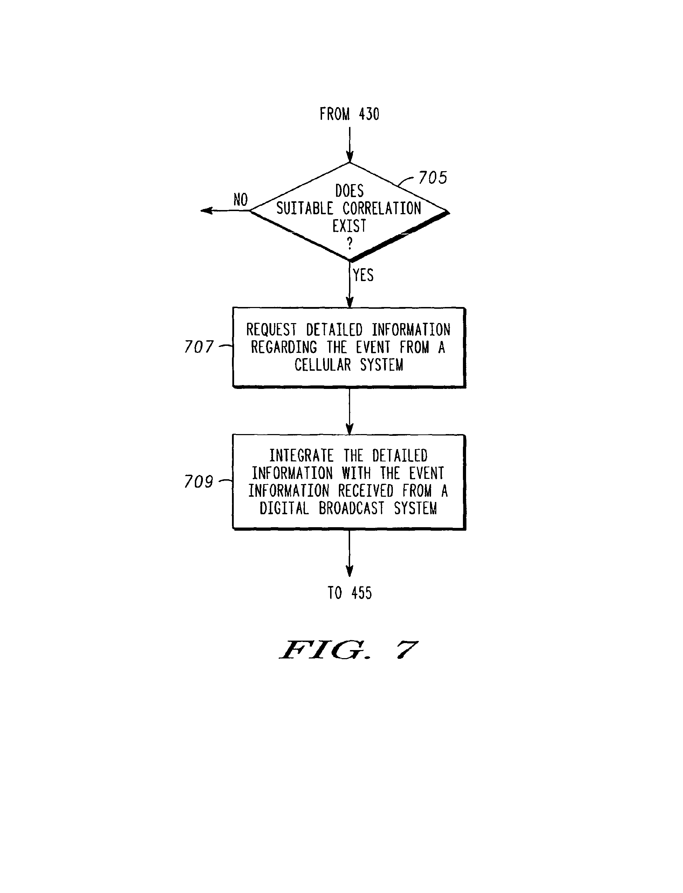

FIG. 7 illustrates a flowchart of an alternate embodiment of the method of FIG. 4 in accordance with the present invention. The method of FIG. 7 modifies the method of FIG. 4 by replacing step 435 with steps 705, 707 and 709. At step 705, if a suitable correlation exists then step 707 is executed. In step 707, if a suitable correlation exists between the broadcast system based location information 130 and the cellular system based location information 125, detailed information regarding the event is requested by the wireless device 102 from one of the cellular systems 140, 160. The detailed information may be, for example, map information that is more detailed in the vicinity of the wireless device 102 than map information that is included with the event information 113 sent by one of the broadcast systems 140, 160. Then, at step 709, the detailed information regarding the event is integrated with event information 113 received from a digital broadcast system 140, 160. This integration takes place prior to the presentation of the broadcast system based location information 130 simultaneously with the cellular system based location information 125 in step 455. This integration may be, for example, the merging (e.g., superimposing) of map information that is included with the event information with more detailed map information sent to the wireless device 102 by one of the cellular systems 146, 166.

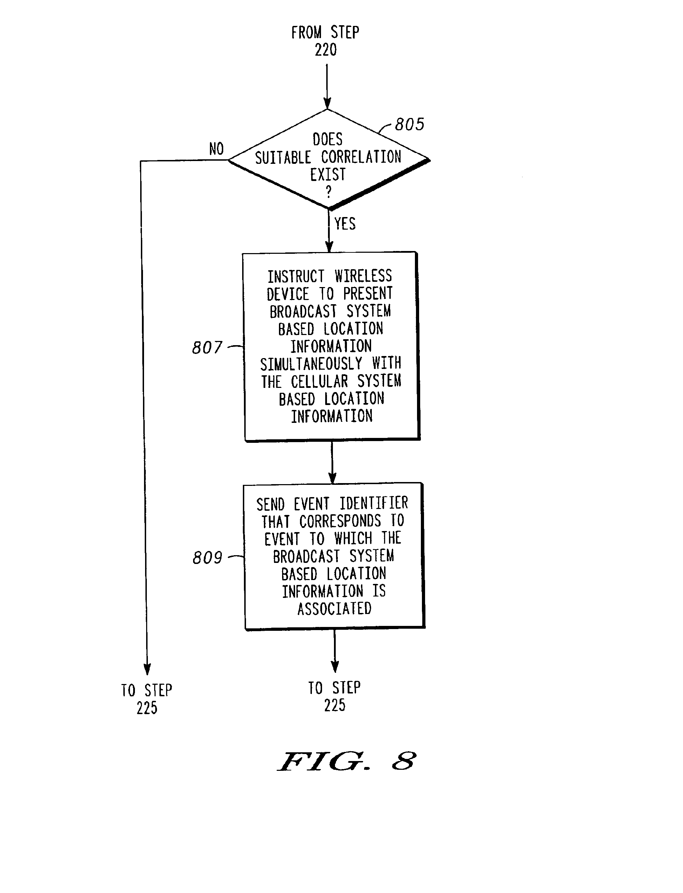

FIG. 8 illustrates a flowchart of an alternate embodiment of the method of FIG. 2 in accordance with the present invention. The method of FIG. 8 modifies the method of FIG. 2 by adding steps 805, 807, and 809 after step 222. The method of FIG. 8 is for use in the alternative embodiment of the present invention that includes broadcast/cellular location correlation network elements 172, 174 as part of the cellular systems 146, 166. At step 805, if the broadcast/cellular location correlation network element 172, 174 has found that a suitable correlation exists between the broadcast system based location information 130 and the cellular system based location information 125 then step 807 is executed. In step 807, the cellular system 146, 166 instructs the wireless device 102 to present the broadcast system based location information 130 simultaneously with the cellular system based location information 125. In step 809, the cellular system 146, 166 sends an event identifier to the wireless device 102. The event identifier corresponds to the event that the broadcast system based location information 130 is associated with. When the wireless device 102 receives the event identifier, it is able to determine which event that the instructions to display the broadcast system based location information 130 simultaneously with the cellular system based location information 125 corresponds to. This enables the wireless device to determine which broadcast system based location information 130 to display.

In another embodiment of the present invention, the present invention includes a computer readable memory. The computer readable memory is used to store instructions that cause the wireless device 102 and/or cellular system 146, 166 to execute steps in accordance with the present invention such as those described with regard to FIGS. 2-7. The computer readable memory may be RAM, ROM, floppy disk, optical disk, DVD ROMS, CD ROMS, or any other suitable memory.

The preceding discussion has presented a method and apparatus for determining the location of a wireless device. This method combines location information from a broadcast system with location information derived from information received from a cellular system. This combination of location information can then be presented to the user of the wireless device. This allows broadcast information that is intended for a large number of users to be personalized for a particular user of a wireless device. The usefulness of the information presented to the user is thus enhanced. Because the broadcast information is delivered to a large number of users simultaneously, this is more efficient than sending all of the information to the individual wireless devices over a cellular system. Hence, the combined information can be more efficiently delivered to the wireless device. Furthermore, since the combined information is just presented when a suitable correlation exist between the location information from the broadcast system and the wireless device, only relevant information is presented to the wireless device user.

In addition, .enhanced location accuracy may be provided based on a location correlation. For example, where both broadcast and cellular networks have location determination capabilities, location information in the cellular network can be calculated either by a specific network element or by the terminal device itself. On the contrary, the location information within the broadcast network can be calculated only by the terminal device. Each of these location information determinations is made with a certain degree of accuracy/certainty. These two independently calculated certainties of the location data can be used by the terminal device to calculate a new location with an enhanced certainty level.

In an alternative embodiment, the cellular network can send a feedback message to the broadcast network to control the format of a location broadcast for a mobile device. As previously stated, the location information on the broadcast network has to be calculated on the terminal side. There are different methods/techniques for location determination and capabilities of the terminal in this respect can be limited to only few specific techniques.

As the broadcast network might not know a priori what the location capabilities of the terminal are, the terminal notifies the broadcast network of its location determination capabilities by sending a message via the cellular network to the broadcast network. However the terminal will need to do so via the cellular network as there may be no direct up link path on the broadcast network.

It should be understood that the implementation of other variations and modifications of the invention and its various aspects will be apparent to those of ordinary skill in the art, and that the invention is not limited by the specific embodiments described. For example, the broadcast system may be any type of broadcast system and not just DxB or DxB systems. The broadcast system may be any television or radio broadcast system and may even be a satellite based broadcast system in which signals are broadcast from satellites to wireless devices. The cellular systems may be any type of two-way radio systems. The information presented by the wireless device may be any type of data that may be modified or enhanced based on location information of the wireless device. Also, the location data from cellular and broadcast sources can be correlated to enhance the location determination accuracy. Moreover, a feedback message can be sent to the broadcast network via the cellular network that can represent a request to change a format of a location broadcast. It is therefore contemplated to cover by the present invention, any and all modifications, variations, or equivalents that fall within the scope of the claims.

## Claims

1. A method for determining a location of a wireless device (102) comprising the steps of:
receiving broadcast system based location information (130);
receiving cellular system based location information (125); and
comparing the broadcast system based location information (130) and the cellular system based location information (125) to determine if a suitable correlation exists between the broadcast system based location information (130) and the cellular system based location information (125).

2. The method of claim 1 wherein the broadcast system based location information (130) and cellular system based location information (125) includes data representing at least one of latitude, longitude, altitude, map information, and a coordinate with respect to a fixed point.

3. The method of either of claims 1and 2 further including the step of receiving data representing the length of time for which the broadcast system based location information (130) is valid.

4. The method of any preceding claim, wherein the step of receiving the broadcast system based location information (130) includes receiving event information (113) that includes the broadcast system based location information (130).

5. The method of claim 4 wherein the received event information (113) includes at least one of map information and audio informations.

6. The method of any preceding claim, wherein a suitable correlation exists between the broadcast system based location information (130) and the cellular system based location information (125) if the respective locations represented by the broadcast system based location information (130) and the cellular system based location information (125) are suitably close to each other.

7. The method of any preceding claim, wherein the step of obtaining the cellular system based location information (125) comprises the steps of:
receiving cellular system based location data (132); and
deriving the cellular system based location information (125) using the cellular system based location data (132).

8. The method of any preceding claim, further including the step of giving audio instructions based on the cellular system based location information (125).

9. The method of any preceding claim, further including the steps of:
receiving map information from a broadcast system;
receiving, if a suitable correlation exist, detailed map information from a cellular system; and
displaying, if a suitable correlation exist, a map derived from the map information received from the broadcast system and the detailed map information received from the cellular system.

10. The method of any preceding claim, wherein:
the broadcast system based location information (130) is received by a DxB receiver (106);
the cellular system based location data (132) is received by a Cellular receiver (108);
and comprising the step of presenting, if a suitable correlation exist, the broadcast system based location information (130) simultaneously with the cellular system based location information (125).

11. The method of claim 10 wherein the step of receiving, by the DxB receiver (106), includes the step of:
receiving, by the DxB receiver (106), a stream of DxB data,
filtering, based on header information in the stream of DxB data, the stream of DxB data to obtain filtered information of a type requested by a user of the wireless device (102); and
extracting, from the filtered information, broadcast system based location information (130) and event information (113) associated with an event.

12. The method of claim 11 wherein the event information (113) associated with an event includes information selected from the group consisting of map information, a duration of time for which the data associated with an event is valid, and audio commentary.

13. The method of either of claims 11 and 12 further including the step of
requesting, if a suitable correlation exist, detailed information regarding the event from a cellular system (146,166); and
integrating, prior to the step of presenting, the detailed information regarding the event with event information (113) received from a digital broadcast system (140, 160) prior to the step of presenting.

14. The method of any of claims 10 to 13, wherein the cellular system based location information (125) includes low accuracy cellular system based location information and the method further includes the step of obtaining, if a suitable correlation exist, precision cellular system location information.

15. The method of claim 14 wherein the step of obtaining precision location information includes obtaining precision location information using a satellite based location determination method.

16. The method of claim 14 wherein the step of obtaining, if a suitable correlation exist, precision location information is obtaining, if a suitable correlation exist, precision location information via the cellular receiver (108).

17. The method of any of claims 10 to 16, wherein the step of presenting includes displaying a map showing a location of the wireless device (102) represented by the cellular system based location information(125).

18. The method of any of claims 10 to 17, including the step of sending a message via a cellular transceiver, to a DxB network identifying location determination capabilities of a wireless device (102) that receives the broadcast system location information (130).

19. A wireless device (102) comprising:
a broadcast receiver (106) operable to receive broadcast system based location information (130);
a cellular receiver (108) operable to receive cellular system based location data (132); and
a broadcast/cellular system location correlation circuit (120) operably coupled to the broadcast receiver (106) and the cellular receiver (108), wherein the broadcast/cellular system location correlation circuit (120) is operable to determine if the broadcast system based location information (130) and cellular system based location information (125) derived from the cellular system based location data (132) are suitably correlated.

20. The wireless device of claim 19 further comprising a location determination circuit (124) coupled to the broadcast/cellular system location correlation circuit (120).

21. The wireless device of claim 20 wherein the location determination circuit (124) is operable to calculate a location of the wireless device (102) using signals received from satellites.

22. The wireless device of claim 20 wherein the location determination circuit (124) is operable to calculate a location of the wireless device (102) using signals received from a cellular system (146, 166).

23. The wireless device of any of claims 19 to 22, further comprising a multi-mode presentation generator (122) coupled to the broadcast/cellular system location correlation circuit (120), the multi-mode presentation generator (122) operable to simultaneously present information derived from the broadcast system based location information (130) and the cellular system based location information (125) to a user of the wireless device (102).

24. The wireless device of claim 23 further comprising a display apparatus (138) coupled to the multi-mode presentation generator (122) operable to display information derived from the broadcast system based location information (130) and the cellular system based location information (125) to a user of the wireless device (102).

25. The wireless device of either of claims 23 and 24, further comprising a speaker (136) coupled to the multi-mode presentation generator (122) operable to generate an audible message derived from the broadcast system based location information (130) and the cellular system based location information(125).

26. A wireless system comprising a plurality of wireless devices (102) in accordance with any of claims 19 to 25, and
a broadcast/cellular location correlation network element (172, 174) operable to receive broadcast system based location information, to receive cellular system based location information for the plurality of wireless devices (102) and to determine if the broadcast system based location information and cellular system based location information is suitably correlated for each of the plurality of wireless devices (102) for which cellular system based location information is received.

27. The wireless system of claim 26 wherein the broadcast/cellular system location correlation network element (172, 174) is further operable to instruct a wireless device (102) of the plurality of wireless devices to present the broadcast system based location information simultaneously with the cellular system based location information when a suitable correlation exist between the broadcast system based location information and the cellular system based location information for the wireless device (102).

28. The wireless system of claim 27 wherein as part of the operation of instructing the wireless device (102), the broadcast/cellular system location correlation network element (172, 174) sends to the wireless device (102) an event identifier that corresponds to an event to which the broadcast system based location information is associated.

29. A computer-readable medium having stored therein executable instructions for performing steps of:
receiving broadcast system based location information (130);
receiving cellular system based location information (125); and
comparing the broadcast system based location information (130) and the cellular system based location information (125) to determine if a suitable correlation exists between the broadcast system based location information (130) and the cellular system based location information (125).

30. The computer-readable medium of claim 29 having stored therein additional executable instructions for performing the steps of:
receiving cellular system based location data (132); and
deriving the cellular system based location information (125) using the cellular system based location data (132).

31. The computer-readable medium of either of claims 29 and 30, having stored therein additional executable instructions for performing the steps of:
receiving map information from a broadcast system (140, 160);
receiving, if a suitable correlation exist, detailed map information from a cellular system (146, 166); and
displaying, if a suitable correlation exist, a map derived from the map information received from the broadcast system and the detailed map information received from the cellular system.

## Patentansprüche

1. Verfahren zum Bestimmen eines Orts einer drahtlosen Einrichtung (102), umfassend die folgenden Schritte:
Empfangen von rundsendesystembasierten Ortsinformationen (130);
Empfangen von zellensystembasierten Ortsinformationen (125) und
Vergleichen der rundsendesystembasierten Ortsinformationen (130) und der zellensystembasierten Ortsinformationen (125), um zu bestimmen, ob zwischen den rundsendesystembasierten Ortsinformationen (130) und den zellensystembasierten Ortsinformationen (125) eine geeignete Korrelation existiert.

2. Verfahren nach Anspruch 1, wobei die rundsendesystembasierten Ortsinformationen (130) und die zellensystembasierten Ortsinformationen (125) Daten enthalten, die mindestens eines von Breite, Länge, Höhe, Karteninformationen und eine Koordinate bezüglich eines festen Punkts darstellen.

3. Verfahren nach einem der Ansprüche 1 und 2, weiterhin mit dem Schritt des Empfangens von Daten, die die Zeitdauer darstellen, für die rundsendesystembasierten Ortsinformationen (130) gültig sind.

4. Verfahren nach einem der vorhergehenden Ansprüche, wobei der Schritt des Empfangens der rundsendesystembasierten Ortsinformationen (130) das Empfangen von Ereignisinformationen (113) beinhaltet, die die rundsendesystembasierten Ortsinformationen (130) enthalten.

5. Verfahren nach Anspruch 4, wobei die empfangenen Ereignisinformationen (113) mindestens eine von Karteninformationen und Audioinformationen enthalten.

6. Verfahren nach einem der vorhergehenden Ansprüche, wobei zwischen den rundsendesystembasierten Ortsinformationen (130) und den zellensystembasierten Ortsinformationen (125) eine geeignete Korrelation existiert, wenn die durch die rundsendesystembasierten Ortsinformationen (130) und die zellensystembasierten Ortsinformationen (125) dargestellten jeweiligen Orte geeignet nahe beieinander liegen.

7. Verfahren nach einem der vorhergehenden Ansprüche, wobei der Schritt des Erhaltens der zellensystembasierten Ortsinformationen (125) die folgenden Schritte umfasst:
Empfangen von zellensystembasierten Ortsdaten (132); und
Ableiten der zellensystembasierten Ortsinformationen (125) unter Verwendung der zellensystembasierten Ortsdaten (132).

8. Verfahren nach einem der vorhergehenden Ansprüche, weiterhin mit dem Schritt des Erteilens von Audioanweisungen auf der Basis der zellensystembasierten Ortsinformationen (125).

9. Verfahren nach einem der vorhergehenden Ansprüche, weiterhin mit den Schritten:
Empfangen von Karteninformationen von einem Rundsendesystem;
Empfangen, falls eine geeignete Korrelation existiert, detaillierter Karteninformationen von einem Zellensystem; und
Anzeigen, wenn eine geeignete Korrelation existiert, einer von den von dem Rundsendesystem empfangenen Karteninformationen und den von dem Zellensystem empfangenen detaillierten Karteninformationen abgeleiteten Karte.

10. Verfahren nach einem der vorhergehenden Ansprüche, wobei:
die rundsendesystembasierten Ortsinformationen (130) von einem DxB-Empfänger (106) empfangen werden;
die zellensystembasierten Ortsdaten (132) von einem Zellenempfänger (108) empfangen werden;
und umfassend den Schritt des Präsentierens, wenn eine geeignete Korrelation existiert, der rundsendesystembasierten Ortsinformationen (130) simultan mit den zellensystembasierten Ortsinformationen (125).

11. Verfahren nach Anspruch 10, wobei der Schritt des Empfangens durch den DxB-Empfänger (106) die Schritte beinhaltet:
Empfangen eines Stroms von DxB-Daten durch den DxB-Empfänger (106),
Filtern des Strom von DxB-Daten auf der Basis von Datenkopfinformationen in dem Strom von DxB-Daten, um gefilterte Informationen eines Typs zu erhalten, die von einem Benutzer der drahtlosen Einrichtung (102) angefordert werden; und
Extrahieren von rundsendesystembasierten Ortsinformationen (130) und mit einem Ereignis assoziierten Ereignisinformationen (113) aus den gefilterten Informationen.

12. Verfahren nach Anspruch 11, wobei die mit einem Ereignis assoziierten Ereignisinformationen (113) Informationen enthalten ausgewählt aus der Gruppe bestehend aus Karteninformationen, einer Zeitdauer, für die die mit einem Ereignis assoziierten Daten gültig sind, und einem Audiokommentar.

13. Verfahren nach einem der Ansprüche 11 und 12, weiterhin mit den Schritten:
Anfordern, wenn eine geeignete Korrelation existiert, detaillierter Informationen hinsichtlich des Ereignisses von einem Zellensystem (146, 166); und
Integrieren, vor dem Schritt des Präsentierens, der detaillierten Informationen hinsichtlich des Ereignisses mit Ereignisinformationen (113), die vor dem Schritt des Präsentierens von einem digitalen Rundsendesystem (140, 160) empfangen wurden.

14. Verfahren nach einem der Ansprüche 10 bis 13, wobei die zellensystembasierten Ortsinformationen (125) zellensystembasierte Ortsinformationen geringer Genauigkeit enthalten und das Verfahren weiterhin den Schritt des Erhaltens, wenn eine geeignete Korrelation existiert, von präzisen Zellensystemortsinformationen beinhaltet.

15. Verfahren nach Anspruch 14, wobei der Schritt des Erhaltens präziser Ortsinformationen das Erhalten präziser Ortsinformationen unter Verwendung eines satellitenbasierten Ortsbestimmungsverfahrens beinhaltet.

16. Verfahren nach Anspruch 14, wobei der Schritt des Erhaltens, wenn eine geeignete Korrelation existiert, präziser Ortsinformationen das Erhalten, wenn eine geeignete Korrelation existiert, präziser Ortsinformationen über den Zellenempfänger (108) beinhaltet.

17. Verfahren nach einem der Ansprüche 10 bis 16, wobei der Schritt des Präsentierens das Anzeigen einer Karte beinhaltet, die einen Ort der drahtlosen Einrichtung (102) zeigt, dargestellt durch die zellensystembasierten Ortsinformationen (125).

18. Verfahren nach einem der Ansprüche 10 bis 17, mit dem Schritt des Sendens einer Nachricht über einen Zellensendeempfänger an ein DxB-Netz, Ortsbestimmungsfähigkeiten einer drahtlosen Einrichtung (102) identifizierend, die rundsendesystembasierte Ortsinformationen (130) empfängt.

19. Drahtlose Einrichtung (102), umfassend:
einen Rundsendeempfänger (106), der betrieben werden kann, um rundsendesystembasierte Ortsinformationen (130) zu empfangen;
einen Zellenemfpänger (108), der betrieben werden kann, um zellensystembasierte Ortsdaten (132) zu empfangen; und
eine Rundsende-/Zellensystem-Ortskorrelationsschaltung (120), die betreibbar an den Rundsendeempfänger (106) und den Zellenempfänger (108) gekoppelt ist, wobei die Rundsende-/Zellensystem-Ortskorrelationsschaltung (120) betrieben werden kann, um zu bestimmen, ob die rundsendesystembasierten Ortsinformationen (130) und die von den zellensystembasierten Ortsdaten (132) abgeleiteten zellensystembasierten Ortsinformationen (125) geeignet korreliert sind.

20. Drahtlose Einrichtung nach Anspruch 19, weiterhin umfassend eine an die Rundsende-/Zellensystem-Ortskorrelationsschaltung (120) gekoppelte Ortsbestimmungsschaltung (124).

21. Drahtlose Einrichtung nach Anspruch 20, wobei die Ortsbestimmungsschaltung (124) betrieben werden kann, unter Verwendung von von Satelliten empfangenen Signalen einen Ort der drahtlosen Einrichtung (102) zu berechnen.

22. Drahtlose Einrichtung nach Anspruch 20, wobei die Ortsbestimmungsschaltung (124) betrieben werden kann, unter Verwendung von von einem Zellensystem (146, 166) empfangenen Signalen einen Ort der drahtlosen Einrichtung (102) zu berechnen.

23. Drahtlose Einrichtung nach einem der Ansprüche 19 bis 22, weiterhin umfassend einen Multimodus-Präsentationsgenerator (122), der an die Rundsende-/Zellensystem-Ortskorrelationsschaltung (120) gekoppelt ist, wobei der Multimodus-Präsentationsgenerator (122) betrieben werden kann, von den rundsendesystembasierten Ortsinformationen (130) und den zellensystembasierten Ortsinformationen (125) abgeleitete Informationen simultan einem Benutzer der drahtlosen Einrichtung (102) zu präsentieren.

24. Drahtlose Einrichtung nach Anspruch 23, weiterhin umfassend eine an den Multimodus-Präsentationsgenerator (122) gekoppelte Displayvorrichtung (138), die betrieben werden kann, von den rundsendesystembasierten Ortsinformationen (130) und den zellensystembasierten Ortsinformationen (125) abgeleitete Informationen einem Benutzer der drahtlosen Einrichtung (102) anzuzeigen.

25. Drahtlose Einrichtung nach einem der Ansprüche 23 und 24, weiterhin umfassend einen an den Multimodus-Präsentationsgenerator (122) gekoppelten Lautsprecher (136), der betrieben werden kann, eine von den rundsendesystembasierten Ortsinformationen (130) und den zellensystembasierten Ortsinformationen (125) abgeleitete hörbare Nachricht zu erzeugen.

26. Drahtloses System, umfassend mehrere drahtlose Einrichtungen (102) nach einem der Ansprüche 19 bis 25, und
ein Rundsende-/Zellenortskorrelationsnetzelement (172, 174), das betrieben werden kann, um rundsendesystembasierte Ortsinformationen zu empfangen, um zellensystembasierte Ortsinformationen für die mehreren drahtlosen Einrichtungen (102) zu empfangen und um zu bestimmen, ob die rundsendesystembasierten Ortsinformationen und die zellensystembasierten Ortsinformationen geeignet für jede der mehreren drahtlosen Einrichtungen (102), für die zellensystembasierte Ortsinformationen empfangen werden, korreliert sind.

27. Drahtloses System nach Anspruch 26, wobei das Rundsende-/Zellensystem-Ortskorrelationsnetzelement (172, 174) weiterhin betrieben werden kann, eine drahtlose Einrichtung (102) der mehreren drahtlosen Einrichtungen anzuweisen, die rundsendesystembasierten Ortsinformationen simultan mit den zellensystembasierten Ortsinformationen zu präsentieren, wenn zwischen den rundsendesystembasierten Ortsinformationen und den zellensystembasierten Ortsinformationen für die drahtlose Einrichtung (102) eine geeignete Korrelation existiert.

28. Drahtloses System nach Anspruch 27, wobei als Teil des Vorgangs, die drahtlose Einrichtung (102) anzuweisen, das Rundsende-/Zellensystem-Ortskorrelationsnetzelement (172, 174) an die drahtlose Einrichtung (102) eine Ereignisidentifizierung sendet, die einem Ereignis entspricht, mit dem die rundsendesystembasierten Ortsinformationen assoziiert sind.

29. Computerlesbares Medium mit darin gespeicherten ausführbaren Anweisungen zum Ausführen der Schritte:
Empfangen von rundsendesystembasierten Ortsinformationen (130);
Empfangen von zellensystembasierten Ortsinformationen (125); und
Vergleichen der rundsendesystembasierten Ortsinformationen (130) und der zellensystembasierten Ortsinformationen (125), um zu bestimmen, ob zwischen den rundsendesystembasierten Ortsinformationen (130) und den zellensystembasierten Ortsinformationen (125) eine geeignete Korrelation vorliegt.

30. Computerlesbares Medium nach Anspruch 29 mit darin gespeicherten zusätzlichen ausführbaren Anweisungen zum Ausführen der Schritte:
Empfangen von zellensystembasierten Ortsdaten (132); und
Ableiten der zellensystembasierten Ortsinformationen (125) unter Verwendung der zellensystembasierten Ortsdaten (132).

31. Computerlesbares Medium nach einem der Ansprüche 29 und 30 mit darin gespeicherten zusätzlichen ausführbaren Anweisungen zum Ausführen der Schritte:
Empfangen von Karteninformationen von einem Rundsendesystem (140, 160);
Empfangen, wenn eine geeignete Korrelation existiert, detaillierter Karteninformationen von einem Zellensystem (146, 166); und
Anzeigen, wenn eine geeignete Korrelation existiert, einer von den von dem Rundsendesystem empfangenen Karteninformationen und den von dem Zellensystem empfangenen detaillierten Karteninformationen abgeleiteten Karte.

## Revendications

1. Procédé de détermination d'une position d'un dispositif sans fil (102) comprenant les étapes suivantes :
réception d'informations de position basées sur un système de diffusion (130) ;
réception d'informations de position basées sur un système cellulaire (125) ; et
comparaison des informations de position basées sur un système de diffusion (130) et des informations de position basées sur un système cellulaire (125) afin de déterminer si une corrélation convenable existe entre les informations de position basées sur un système de diffusion (130) et les informations de position basées sur un système cellulaire (125).

2. Procédé selon la revendication 1, dans lequel les informations de position basées sur un système de diffusion (130) et les informations de position basées sur un système cellulaire (125) comportent des données qui représentent au moins l'une d'une altitude, d'une longitude, d'une altitude, d'une information de carte, et d'une coordonnée par rapport à un point fixe.

3. Procédé selon l'une des revendications 1 ou 2, comportant en outre l'étape de réception de données représentant la longueur de temps pendant laquelle les informations de position basées sur un système de diffusion (130) sont valables.

4. Procédé selon l'une quelconque des revendications précédentes, dans lequel l'étape de réception des informations de position basées sur un système de diffusion (130) comporte la réception d'informations d'événement (113) qui comportent les informations de position basées sur un système de diffusion (130).

5. Procédé selon la revendication 4, dans lequel les informations d'événement reçues (113) comportent au moins l'une d'informations de carte et d'informations audio.

6. Procédé selon l'une quelconque des revendications précédentes, dans lequel existe une corrélation convenable entre les informations de position basées sur un système de diffusion (130) et les informations de position basées sur un système cellulaire (125) si les positions respectives représentées par les informations de position basées sur un système de diffusion (130) et les informations de position basées sur un système cellulaire (125) sont convenablement proches les unes des autres.

7. Procédé selon l'une quelconque des revendications précédentes, dans lequel l'étape d'obtention des informations de position basées sur un système cellulaire (125) comprend les étapes suivantes :
réception de données de position basées sur un système cellulaire (132) ; et
dérivée des informations de position basées sur un système cellulaire (125) en utilisant les données de position basées sur un système cellulaire (132).

8. Procédé selon l'une quelconque des revendications précédentes, comportant en outre l'étape de délivrance d'instructions audio basées sur les informations de position basées sur un système cellulaire (125) .

9. Procédé selon l'une quelconque des revendications précédentes, comportant en outre les étapes suivantes:
réception d'informations de carte depuis un système de diffusion ;
réception, si une corrélation convenable existe, d'informations de carte détaillées depuis un système cellulaire ; et
affichage, si une corrélation convenable existe, d'une carte dérivée des informations de carte reçues du système de diffusion et des informations de carte détaillées reçues du système cellulaire.

10. Procédé selon l'une quelconque des revendications précédentes, dans lequel
les informations de position basées sur un système de diffusion (130) sont reçues par un récepteur DxB (106)
les informations de position basées sur un système cellulaire (132) sont reçues par un récepteur cellulaire (108) ;
et comprenant l'étape de présentation, si une corrélation convenable existe, des informations de position basées sur un système de diffusion (130) simultanément aux informations de position basées sur un système cellulaire (125).

11. Procédé selon la revendication 10, dans lequel l'étape de réception, par le récepteur DxB (106), comporte l'étape suivante :
réception, par le récepteur DxB (106), d'un train de données DxB,
filtrage, d'après des informations d'en-têtes dans le train de données DxB, du train de données DxB afin d'obtenir des informations filtrées d'un type demandé par un utilisateur du dispositif sans fil (102), et
extraction, à partir des informations filtrées, d'informations de position basées sur un système de diffusion (130) et d'informations d'événement (113) associées à un événement.

12. Procédé selon la revendication 11, dans lequel les informations d'événement (113) associées à un événement comportent des informations sélectionnées dans le groupe consistant en informations de carte, durée de temps pendant laquelle les données associées à un événement sont valables, et commentaire audio.

13. Procédé selon l'une ou l'autre des revendications 11 et 12, comportant en outre l'étape suivante :
requête, si une corrélation convenable existe, d'informations détaillées concernant l'événement auprès d'un système cellulaire (146, 166) ; et
intégration, avant l'étape de présentation, des informations détaillées concernant l'événement avec des informations d'événement (113) reçues d'un système de diffusion numérique (140, 160) avant l'étape de présentation.

14. Procédé selon l'une quelconque des revendications 10 à 13, dans lequel les informations de position basées sur un système cellulaire (125) comportent des informations de position basées sur un système cellulaire de faible précision et le procédé comporte en outre l'étape d'obtention, si une corrélation convenable existe, d'informations de position basées sur un système cellulaire précises.

15. Procédé selon la revendication 14, dans lequel l'étape d'obtention d'informations de position précises comporte l'obtention d'informations de position précises en utilisant un procédé de détermination de position basé sur satellite.

16. Procédé selon la revendication 14, dans lequel l'étape d'obtention d'informations de position précises comporte, si une corrélation convenable existe, l'obtention, si une corrélation convenable existe, d'informations de position précises par l'intermédiaire du récepteur cellulaire (108).

17. Procédé selon l'une quelconque des revendications 10 à 16, dans lequel l'étape de présentation comporte l'affichage d'une carte montrant une position du dispositif sans fil (102) représentée par les informations de position basées sur un système cellulaire (125).

18. Procédé selon l'une quelconque des revendications 10 à 17, comportant l'étape d'envoi d'un message par l'intermédiaire d'un émetteur-récepteur cellulaire, à un réseau DxB identifiant des capabilités de détermination de position d'un dispositif sans fil (102) qui reçoit les informations de position basées sur un système de diffusion (130).

19. Dispositif sans fil (102) comprenant :
un récepteur de diffusion (106) exploitable pour recevoir des informations de position basées sur un système de diffusion (130) ;
un récepteur cellulaire (108) exploitable pour recevoir des informations de position basées sur un système cellulaire (125) ; et
un circuit de corrélation de position de système de diffusion/cellulaire (120) couplé opérationnellement au récepteur de diffusion (106) et au récepteur cellulaire (108) dans lequel le circuit de corrélation de position de système de diffusion/cellulaire (120) est exploitable pour déterminer si les informations de position basées sur un système de diffusion (130) et les informations de position basées sur un système cellulaire (125) dérivées des données de position basées sur un système cellulaire (132) sont convenablement corrélées.

20. Dispositif sans fil selon la revendication 19, comprenant en outre un circuit de détermination de position (124) couplé au circuit de corrélation de position de système de diffusion/cellulaire (120).

21. Dispositif sans fil selon la revendication 20, dans lequel le circuit de détermination de position (124) est exploitable pour calculer une position du dispositif sans fil (102) au moyen de signaux reçus de satellites.

22. Dispositif sans fil selon la revendication 20, dans lequel le circuit de détermination de position (124) est exploitable pour calculer une position du dispositif sans fil (102) au moyen de signaux reçus d'un système cellulaire (146, 166).

23. Dispositif sans fil selon l'une quelconque des revendications 19 à 22, comprenant en outre un générateur de présentation multi-mode (122) couplé au circuit de corrélation de position de système de diffusion/cellulaire (120), le générateur de présentation multi-mode (122) étant exploitable pour présenter simultanément des informations dérivées des informations de position basées sur un système de diffusion (130) et des informations de position basées sur un système cellulaire (125) à un utilisateur du dispositif sans fil (102) .

24. Dispositif sans fil selon la revendication 23, comprenant en outre un appareil d'affichage (138) couplé au générateur de présentation multi-mode (122) exploitable pour afficher des informations dérivées des informations de position basées sur un système de diffusion (130) et des informations de position basées sur un système cellulaire (125) à un utilisateur du dispositif sans fil (102).

25. Dispositif sans fil selon l'une ou l'autre des revendications 23 et 24, comprenant en outre un haut-parleur (136) couplé au générateur de présentation multi-mode (122) exploitable pour générer un message sonore dérivé des informations de position basées sur un système de diffusion (130) et des informations de position basées sur un système cellulaire (125).

26. Système sans fil comprenant une pluralité de dispositifs sans fil (102) conformément à l'une quelconque des revendications 19 à 25, et
un élément de réseau de corrélation de position de système de diffusion/cellulaire (172, 174) exploitable pour recevoir des informations de position basées sur un système de diffusion, recevoir des informations de position basées sur un système cellulaire pour la pluralité de dispositifs sans fil (102) et déterminer si les informations de position basées sur un système de diffusion et les informations de position basées sur un système cellulaire sont convenablement corrélées pour chacun de la pluralité de dispositifs sans fil (102) pour lesquels des informations de position basées sur un système cellulaire sont reçues.

27. Système sans fil selon la revendication 26, dans lequel l'élément de réseau de corrélation de position de système de diffusion/cellulaire (172, 174) est exploitable en outre pour instruire un dispositif sans fil (102) de la pluralité de dispositifs sans fil de présenter les informations de position basées sur un système de diffusion simultanément aux informations de position basées sur un système cellulaire quand une corrélation convenable existe entre les informations de position basées sur un système de diffusion et les informations de position basées sur un système cellulaire pour le dispositif sans fil (102).

28. Système sans fil selon la revendication 27, dans lequel dans le cadre de l'opération d'instruction du dispositif sans fil(102), l'élément de réseau de corrélation de position de système de diffusion/cellulaire (172, 174) envoie au dispositif sans fil (102) un identifiant d'événement qui correspond à un événement auquel sont associées les informations de position basées sur un système de diffusion.

29. Support lisible par ordinateur dans lequel sont mémorisées des instructions exécutables pour effectuer les étapes suivantes :
réception d'informations de position basées sur un système de diffusion (130) ;
réception d'informations de position basées sur un système cellulaire (125) ; et
comparaison des informations de position basées sur un système de diffusion (130) et des informations de position basées sur un système cellulaire (125) afin de déterminer si une corrélation convenable existe entre les informations de position basées sur un système de diffusion (130) et les informations de position basées sur un système cellulaire (125).

30. Support lisible par ordinateur selon la revendication 29, dans lequel sont mémorisées des instructions exécutables supplémentaires pour effectuer les étapes suivantes :
réception de données de position basées sur un système cellulaire (132) ; et
dérivée des informations de position basées sur un système cellulaire (125) en utilisant les données de position basées sur un système cellulaire (132).

31. Support lisible par ordinateur selon l'une quelconque des revendications 29 et 30, dans lequel sont mémorisées des instructions exécutables supplémentaires pour effectuer les étapes suivantes :
réception d'informations de carte depuis un système de diffusion (140, 160) ;
réception, si une corrélation convenable existe, d'informations de carte détaillées depuis un système cellulaire (146, 166) ; et
affichage, si une corrélation convenable existe, d'une carte dérivée des informations de carte reçues du système de diffusion et des informations de carte détaillées reçues du système cellulaire.
